# EUROPÄISCHE PATENTANMELDUNG

(11) **EP 2 003 599 A1**
(43) Veröffentlichungstag der Anmeldung: **17.12.2008**
(21) Anmeldenummer: 07110258.6
(22) Anmeldetag: 14.06.2007
(51) Int. Cl.: G06K 9/20, G06K 7/10

(54) **Optoelektronischer Sensor und Verfahren zur Erfassung von Codes**

(71) Anmelder: SICK AG, 79183 Waldkirch (DE)
(72) Erfinder: Reichenbach, Jürgen, 79312 Emmendingen (DE); Schöpflin, Uwe, 79297 Niederwinden (DE)
(74) Vertreter: Ludewigt, Christoph

(57) **Zusammenfassung**

Es wird ein optoelektronischer Sensor (10) zum Erfassen von Codes mit einem Lichtempfänger (22) angegeben, der für ein abschnittsweises Einlesen von Farb-oder Grauwertbilddaten ausgebildet ist sowie mit einer Auswertungseinheit (30), welche die Bilddaten zu einem Gesamtbild (100) zusammensetzen kann, wobei zusätzlich ein Binarisierer (26) des Sensors (10) vorgesehen ist, um aus den Farb-oder Grauwertbilddaten ein Binärbild (102) zu erzeugen.

Dabei ist der Binarisierer (26) für eine Umwandlung in das Binärbild (102) bereits während des Empfangs und/oder in Echtzeit ausgebildet, indem die Farb- oder Grauwertbilddaten jedes eingelesenen Abschnitts binarisiert werden, noch während die weiteren Abschnitte eingelesen werden.

Es wird weiterhin ein entsprechendes Verfahren zum Erfassen von Codes angegeben.

## Beschreibung

Die Erfindung betrifft einen optoelektronischen Sensor und ein Verfahren zur Erfassung von Codes nach den Oberbegriffen von Anspruch 1 und 3 beziehungsweise 17 und 19.

Eine Möglichkeit, eindimensionale Barcodes oder zweidimensionale Matrixcodes optisch zu erfassen, stellen Codeleser dar, welche mit einem Lichtstrahl den Code zeilenweise abtasten. Besonders bei den Matrixcodes werden Codeleser eingesetzt, die auf einem Kamerachip basieren. Auch diese Kamera kann lediglich eine Kamerazeile sein und das Bild wird zusammengesetzt, während ein mobiler Codeleser über das zu lesende Objekt bewegt wird oder die zu erfassenden Objekte mit den Codes werden an einem stationären Codeleser vorbeigeführt. Eine häufige Anwendung ist das automatische Sortieren von Paketen in Logistikzentren oder von Gepäckstücken in Flughäfen.

Solche Kameras liefern in der Regel ein Grauwertbild oder ein Farbbild, beispielsweise ein RGB-Bild mit drei Farbkanälen. Diese Bilddaten werden über einen A/D-Wandler digitalisiert. Bei vielen industriellen Bildverarbeitungsanwendungen, so auch beim Codelesen, ist die wesentliche Information bereits in den Helligkeitsunterschieden eines Grauwertbilds enthalten. Eine Grauwertauflösung beziehungsweise Farbtiefe von 8 Bit, die 256 Farben oder Graubildstufen entspricht, ist für die meisten Anwendungen bereits hinreichend.

Ein Binärbild, also ein reines Schwarzweißbild mit einer Auflösung von nur einem Bit pro Pixel, führt zu einer erheblichen Datenreduktion für die interne Weiterverarbeitung und die Übertragung vom Codeleser nach extern. Damit können mehr Daten pro Zeiteinheit übertragen oder eine geringere Bandbreite verwendet werden. Andererseits besteht jedoch die Gefahr, durch die Reduktion von beispielsweise acht auf ein Bit je Pixel wesentliche Informationen zu verlieren. Um dies zu verhindern, müssen aufwändigere Binarisierungsalgorithmen verwendet werden, die aber wiederum eine relativ hohe Rechenzeit erfordern.

Im Endeffekt ist der Benutzer eines Codelesers oder die angeschlossene Steuerung nicht unbedingt an den eigentlichen Bilddaten interessiert. Stattdessen sollen häufig nur die erkannten Texte und die Dekodierungsergebnisse ausgegeben und eine Zuordnung zu dem zugehörigen Objekt möglich sein, etwa um es an einer Weiche auf einem Förderband zum Sortieren in die richtige Richtung befördern zu können. Dafür genügt es, sich auf so genannte interessierende Bereiche oder ROIs (Regions of Interest) zu beschränken, welche Objekten, Texten oder Codes entsprechen. Selbst innerhalb dieser interessierenden Bereiche ist die eigentlich relevante Information der dekodierte Klartext und nicht die Bildinformation. Ein Codeleser aber, der ausschließlich diese dekodierten Daten ausgibt, ist schwer auf Korrektheit seiner Ergebnisse zu kontrollieren.

Es ist daher Aufgabe der Erfindung, einen optischen Sensor zum Erfassen von Codes anzugeben, welcher sicher und effizient die relevanten Informationen extrahiert. In einer Weiterbildung der Erfindung besteht die Aufgabe darin, den Weg, auf dem diese Informationen abgeleitet wurden, für den Benutzer oder die angeschlossene Steuerung transparent und kontrollierbar zu machen und/oder dieser Steuerung die Möglichkeit zu geben, weitere Bildauswertungen vorzunehmen, welche durch Vorverarbeitung erleichtert ist.

Diese Aufgabe wird durch einen Sensor gemäß Anspruch 1 und ein Verfahren gemäß Anspruch 12 gelöst. Die Binarisierung, durch welche die Datenmenge erheblich reduziert und die weitere Auswertung beschleunigt wird, verzögert erfindungsgemäß die Bildverarbeitung in keiner Weise, weil sie unmittelbar während des Empfangs, im Wesentlichen in Echtzeit, durchgeführt wird. Noch während also die Daten einlaufen, welche für die Zusammensetzung eines Gesamtbilds des Codes benötigt werden, werden die jeweils schon empfangenen Daten bereits binarisiert. Es erfolgt also sofort eine prozessnahe Datenreduktion im Sensor ohne Zeitverzug. Es muss daher kein hoher Datenstrom zum externen Rechner übertragen werden. Wenn das Farbbild oder das Graubild eines Codes vollständig eingelesen ist, steht auch bereits das Binärbild zur Verfügung. Ohne die erfindungsgemäße Lösung müsste eine auf dem Binärbild basierende Dekodierung in einem eigenen verzögernden Schritt auf dem Gesamtbild ausgeführt werden.

Die Erfindung basiert somit auf dem Grundgedanken, Vorverarbeitungsschritte vor der eigentlichen Dekodierung in einer Art Pipeline-Verfahren auszuführen. Nach dem gleichen Gedanken können auch Rauschunterdrückung der Filter oder Filter zum Ausgleich von optischen Verzerrungen in diese Pipeline eingebunden werden, so dass zum Zeitpunkt, zu dem der gesamte Bildbereich mit dem Code eingelesen ist, unmittelbar das fertig vorverarbeitete, binarisierte Bild vorliegt.

In einer vorteilhaften Weiterbildung der Erfindung zur Diagnose, Kontrolle der korrekten Dekodierung des Sensors oder für eine weitergehende Auswertung durch einen Benutzer oder durch eine externe Steuerung ist die Auswertungseinheit dafür ausgebildet, eine strukturierte Datei zu erzeugen, die Dekodierergebnisse und/oder Overlaydaten mit Positionen interessierender Bereiche von erkannten Objekten oder Bereichen mit Codes oder Text enthält. Ein bekanntes Format für eine derartige strukturierte Datei ist das XML-Format. In der strukturierten Datei ist damit sämtliche relevante Information der erfassten Objekte und Codes enthalten. Die Dekodierergebnisse können zur eigentlichen Anwendung wie der Sortierung verwendet werden. Somit kann die Dekodierung überprüft oder beispielsweise mit einem alternativen Auswertungsverfahren reproduziert oder erweitert werden. Eine entsprechende Lösung der weitergehenden Aufgabe ist auch im Anspruch 3 angegeben.

Bevorzugt ist die Auswertungseinheit dafür ausgebildet, das Gesamtbild, das Binärbild und/oder ein Miniaturbild insbesondere als Bestandteil der strukturierten Datei auszugeben. Mittels dieser Bilddaten wird visuell oder für eine externe Bildauswertung nachvollziehbar, wie der Sensor zu den Dekodierergebnissen gelangt ist und ob sie korrekt sind. Es können außerdem ergänzende Auswertungen vorgenommen werden, etwa ein OCR mit Abgleich auf einer Adressdatenbank, deren Kapazität und Zugangsmöglichkeiten dem Sensor selbst nicht zur Verfügung stehen. Mittels "video coding", also eben dieser Bildaufzeichnung und Darstellung derselben an Bedienpersonal, kann auch im Nachhinein ein Fehler lokalisiert oder manuell eingegriffen werden, um den Fehler unmittelbar zu vermeiden oder auszugleichen. Es ist jeweils eine Frage der Anwendung und konfigurierbar, welche der drei Klassen von Bilddaten übertragen werden und welche nicht. Die Miniaturbilder dienen einer weniger speicherintensiven Archivierung und können relativ leicht über das Internet oder ein ähnliches Netzwerk überall verfügbar gemacht werden. Für die vollständigen Bilddaten wären die erforderlichen Speicherkapazitäten und Bandbreiten nicht vorhanden oder zumindest kostenintensiv.

Vorteilhafterweise ist die Auswertungseinheit dafür ausgebildet, die strukturierte Datei mit Croppinginformationen zu versehen, welche die Lage von Objekten in den Bilddaten, insbesondere anhand von Positionen der Eckpunkte, bezeichnen. Diese Art von Cropping, also dem Zurechtschneiden des Bilds auf Softwarebasis, reduziert zwar nicht die zu übertragende Datenmenge. Spätere Bildauswertungen außerhalb des Sensors können aber anhand der Croppinginformationen sofort und ohne besonderen Rechenaufwand ein Cropping vornehmen bzw. die außerhalb des Croppingbereichs liegenden Bilddaten zur beschleunigten Auswertung ignorieren.

Dabei ist bevorzugt die Auswertungseinheit weiterhin dafür ausgebildet, die strukturierte Datei mit grafischen Befehlen zu versehen, welche bei Anzeige der strukturierten Datei in einem externen Anzeigegerät die interessierenden Bereiche optisch markieren, insbesondere durch farbige Rechtecke und/oder die Dekodierergebnisse in Textform anzeigen. Damit ist für den Benutzer auf einen Blick erkennbar, ob alle Codes erfasst sind, ob sie dem richtigen Objekt zugeordnet sind und ob sie plausibel dekodiert sind. Anhand des Klartextes kann auch nachvollzogen und überwacht werden, ob beispielsweise die Sortierung in der richtigen Weise vorgenommen wird. Konfiguration und Überprüfung einer auf dem erfindungsgemäßen optoelektronischen Sensor basierenden Anlage wird damit erheblich erleichtert.

Noch bevorzugter ist die Auswertungseinheit dafür ausgebildet, die strukturierte Datei mit Informationen zu versehen, welche eine Verbindung zwischen erkannten Objekten, Codes und/oder Dekodierergebnissen knüpfen. Damit werden auch Leserfehler vermieden, die auf einer Zuordnung eines an sich richtig dekodierten Codes zum falschen Objekt beruhen oder sie werden zumindest für Bedienpersonal sichtbar gemacht, das dann korrigierend eingreifen kann.

Bevorzugt ist die Auswertungseinheit dafür ausgebildet, die strukturierte Datei mit Informationen zu versehen, welche die Länge, Breite, Höhe und das maximale Boxvolumen erkannter Objekte und/oder dreidimensionale Positionen, insbesondere Höhen, der interessierenden Bereichen zugrundliegenden erkannten Objekte und/oder Bereichen mit Codes oder Text beschreiben. Dies sind wichtige Informationen für das Sortieren oder die Kapazitätsplanung. Die Lage der Codes kann nachgeordneten externen Auswertungen helfen, weitere interessierende Bereiche aufzufinden. Wenn etwa der Sensor selbst nur ein- und zweidimensionale Codes liest, nicht jedoch Textbereiche, kann eine externe OCR-Auswertung mit der in der Praxis fast immer richtigen Hypothese nach Textbereichen suchen, dass diese in der Nähe der Codes liegen. Auf diese Weise kann ein erheblicher Teil des Suchaufwands etwa bei der externen Texterkennung vermieden werden.

Vorteilhafterweise ist der Sensor ein kamerabasierter Codeleser insbesondere mit einer Zeilenkamera und/oder stationär an einem Förderer montiert. Obwohl auch ein Scanner grundsätzlich die Bilddaten zeilen- oder abschnittsweise erfassen kann, ist für eine eigentliche Bildverarbeitung eine Kamera die mechanisch weniger anfällige und zuverlässigere Lösung. Ebenso ist es zwar grundsätzlich denkbar, beliebige geometrische Bildabschnitte einzulesen und zu dem Gesamtbild zusammenzusetzen, ein zeilenweises Einlesen schafft aber die geringsten Probleme bei der Zusammenfügung der einzelnen Abschnitte. Dennoch ist beispielsweise ohne Weiteres denkbar, einen mehrzeiligen Matrixchip einzusetzen und nur eine aktive Zeile zu verwenden oder jeweils breitere Rechtecke einzulesen. Schließlich ist die Erfindung auch mit mobilen Sensoren oder Codelesern kombinierbar, das Hauptanwendungsfeld ist aber die einleitend beschriebene Sortierung in Logistikzentren oder analoge Aufgaben etwa in Flughäfen. Bei diesen stationären Anwendungen ist die Fördergeschwindigkeit konstant oder zumindest relativ leicht feststellbar und dadurch wird die Zusammensetzung zu einem Gesamtbild erleichtert und das Dekodierungsergebnis besonders zuverlässig.

Bevorzugt ist der Binarisierer für eine Binarisierung mit gleitenden und/oder lokalen Binarisierungsschwellen ausgebildet. Ein Binarisierer mit einer konstanten Bewertungsschwelle würde bei der niemals völlig konstanten Ausleuchtung und Schattenbildungen durch unebene Flächen nicht immer ein für die zuverlässige Dekodierung erforderliches Schwarzweißbild liefern. Dies kann durch intelligente Binarisierungsalgorithmen ausgeglichen werden.

Vorteilhafterweise sind der Lichtempfänger und der Binarisierer dafür ausgebildet, die Farb- oder Grauwertbilddaten jedes Abschnitts im Wesentlichen gleichzeitig mit den binarisierten Bilddaten an die Auswertungseinheit zu übergeben oder zwischenzuspeichern, insbesondere mit den gleichen relativen Adressen. Die Auswertungseinheit hat somit unmittelbar oder über den Speicher einen besonders schnellen Zugriff auf jeweils korrespondierende binäre oder, wo es die Komplexität der Dekodierung erfordert, Farb- oder Grauwertbilddaten. Besonders eine gleiche relative Adresse erleichtert den wiederholten späteren Zugriff auf zueinander korrespondierende Bilddaten.

In einer vorteilhaften Weiterbildung der Erfindung ist der Lichtempfänger über zumindest einen programmierbaren Logikbaustein mit der Auswertungseinheit insbesondere per PCI-Bus verbunden und auf dem programmierbaren Logikbaustein ist der Binarisierer und/oder ein Bildverarbeitungsfilter implementiert. Diese Architektur ermöglicht ein Pipelining, bei dem die programmierbaren Logikbausteine jeweils in Echtzeit oder nahezu in Echtzeit die einlaufenden Daten einer entsprechenden Vorverarbeitung unterziehen. Dabei kommen als Filter rauschunterdrückende Filter, Helligkeitsfilter oder Filter zur Korrektur von Abbildungsfehlern der dem Bildsensor vorgeschalteten Optik in Betracht.

Nochmals in vorteilhafter Weiterbildung ist die Auswertungseinheit mit den Sensorkomponenten in ein gemeinsames Gehäuse integriert und es ist eine Schnittstelle vorgesehen, um Bilddaten des Gesamtbilds und des Binärbilds nach außen weiterzugeben, insbesondere eine drahtgebundene serielle oder Ethernet-Schnittstelle oder eine drahtlose Bluetooth- oder WLAN-Schnittstelle. Der Sensor in dem gemeinsamen Gehäuse stellt damit eine in sich abgeschlossene funktionelle Einheit dar, welche sämtliche relevante Bildverarbeitung vornehmen kann. An der Schnittstelle liegen fertige Dekodierergebnisse an, die unmittelbar zum Sortieren verwendet werden können. Ein externer Rechner für die Bildverarbeitung wird nicht mehr benötigt. Erforderlichenfalls, etwa zu Diagnosezwecken, können aber auch weitere Daten bis hin zu den vollständigen Bilddaten nach extern ausgegeben werden. Bei stationären Anwendungen ist die Verkabelung für eine drahtgebundene Schnittstelle oft nicht besonders störend. Erforderlichenfalls kann aber auch eine drahtlose Übertragung gewählt werden, die bei einem Handgerät oder einer stationären Anwendung mit beengteren räumlichen Verhältnissen störende Kabel überflüssig macht.
Vorteilhafterweise ist der Binarisierer und/oder die Auswertungseinheit dafür ausgebildet, das Binärbild verlustfrei zu komprimieren oder in das Gesamtbild einzucodieren. Ein mögliches Format für eine verlustfreie Kompression ist die Lauflängencodierung, bei der also statt einer Sequenz von gleichwertigen Bits die Anzahl dieser Bits als numerische Zahl gespeichert wird. Dies reduziert nicht nur die Daten, sondern erlaubt auch eine schnellere Untersuchung der Binärbilddaten nach relevanten Codedaten. Völlig ohne die Notwendigkeit zusätzlichen Speicher- oder Bandbreitenbedarfs kann das Binärbild eines der Bits der Farb- oder Grauwertinformation sein. Vorzugsweise wird man dafür ein Bit wählen, welches die Farb-oder Grauwerte möglichst wenig verfälscht, beispielsweise das niederwertigste (LSB).

Dabei ist bevorzugt die Auswertungseinheit dafür ausgebildet, in dem Binärbild Codes anhand von charakteristischen Suchmustern aufzufinden, also Signaturen, welche einen Code gegenüber anderen Bildelementen als solchen kennzeichnen. Dies ist eine besonders schnelle und effiziente Art, die relevanten Stellen mit Codeinformationen in dem Bild aufzufinden. Besonders vorteilhaft ist hierbei, dass diese Suchmuster in durch Lauflängencodierung komprimierten Binärdaten nicht nur erhalten bleiben, sondern sogar schneller aufgefunden werden können.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische dreidimensionale Übersichtsdarstellung der Montage des erfindungsgemäßen optoelektronischen Sensors über einem Förderband, welches Objekte mit zu lesenden Codes durch das Sichtfeld des Sensors fördert;
- Fig. 2: ein Blockschaltbild einer Ausführungsform des erfindungsgemäßen optoelektronischen Sensors;
- Fig. 3a: ein Beispiel eines Grauwertbilds eines zu lesenden Codes, hier eines Barcodes;
- Fig. 3b: ein aus dem Grauwertbild gemäß Figur 3a durch Binarisierung entstandenes Schwarzweißbild;
- Fig. 4a: die schematische Darstellung eines Maxicodes als Beispiel eines zweidimensionalen Codes zur Erläuterung des Auffindens von Codeelementen in einem Binärbild;
- Fig. 4b: die schematische Darstellung eines CR-Codes als Beispiel eines zweidimensionalen Codes;
- Fig. 4c: die schematische Darstellung eines Aztec-Codes als weiteres Beispiel eines zweidimensionalen Codes;
- Fig. 5a: die beispielhafte Darstellung einer Anzeige einer strukturierten Datei mit Positionsanzeige der interessierenden Bereiche und Dekodierungsergebnisse; und
- Fig. 5b: das Beispiel eines Grauwertbilds eines Objekts mit der überlagerten Darstellung der Positionsanzeige der interessierenden Bereiche aus der strukturierten Datei.

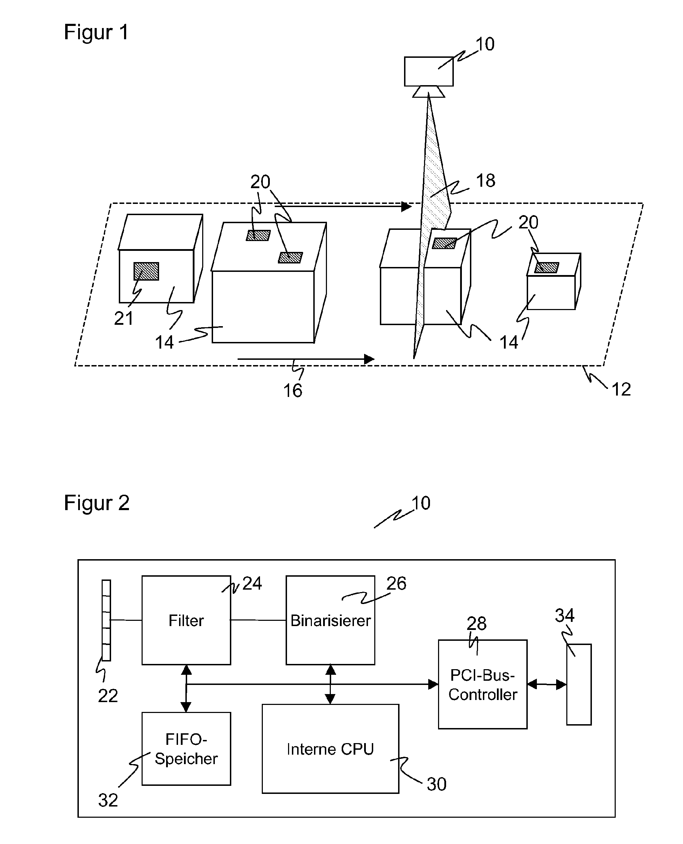

Figur 1 zeigt einen erfindungsgemäßen optoelektronischen Sensor 10, der über einem Förderband 12 montiert ist, welches Objekte 14, wie durch den Pfeil 16 angedeutet, durch das Sichtfeld 18 des Sensors 10 fördert. Die Objekte 14 tragen an ihren Außenflächen Codebereiche 20, die von dem Sensor 10 gelesen und ausgewertet werden. Diese Codebereiche 20 können von dem Sensor 10 nur dann gelesen werden, wenn sie auf der Oberseite oder zumindest von oben erkennbar angebracht sind. Daher kann entgegen der Darstellung in Figur 1 zum Lesen eines etwa seitlich oder unten angebrachten Codes 21 eine Mehrzahl von Sensoren 10 aus verschiedenen Richtungen montiert sein, um eine sogenannte Omnilesung aus allen Richtungen zu ermöglichen.

Das Sichtfeld 18 des Sensors 10 ist hier als eine einzige Ebene dargestellt, die einem zeilenförmigen Bildsensor entspricht. Diese Lesezeile kann durch einen Scanner realisiert sein. In einer bevorzugten Ausführungsform basiert der Sensor 10 aber auf einem Kamerachip, also beispielsweise einem CCD- oder CMOS-Chip mit einer matrixförmigen oder einer zeilenförmigen Anordnung von lichtempfindlichen Pixelelementen. Indem die Objekte 14 in der Förderrichtung 16 zeilenweise aufgenommen oder abgetastet werden, entsteht nach und nach ein Gesamtbild der vorbeigeförderten Objekte 18. Alternativ zu dieser zeilenweisen Abtastung können aber auch andere Abschnitte aufgenommen werden. So ist zum Beispiel denkbar, größere Bereiche aus mehreren Zeilen gleichzeitig aufzunehmen oder, den Zusatzaufwand beim Zusammenfügen eines Gesamtbilds in Kauf nehmend, auch eine beliebige andere Geometrie der jeweils einzelnen aufgenommenen Abschnitte. Das Zusammenfügen zu einem Gesamtbild ist bei einer gleichmäßigen Förderung der Objekte 14 in stationärem Aufbau relativ einfach zu lösen, besonders wenn die Fördereinrichtung 16 Weg- oder Geschwindigkeitsmessdaten liefert. Dennoch ist denkbar, den Sensor 10 auch als mobiles Gerät, beispielsweise Handgerät, einzusetzen und jeweils an dem zu lesenden Bereich vorbeizuführen.

Aufgabe des Sensors 10 ist, die Codebereiche 20 zu erkennen und die dort angebrachten Codes auszulesen, zu dekodieren und dem jeweils zugehörigen Objekt 14 zuzuordnen. Die hierfür notwendige Bildverarbeitung soll nun anhand eines Blockschaltbild des Sensors 10, das in Figur 2 dargestellt ist, näher erläutert werden. Der Sensor 10 und seine Komponenten sind in einem gemeinsamen Gehäuse vorgesehen.

Über eine in Figur 2 nicht gezeigte Kameraoptik, die üblicherweise eine Sammellinse und eine schützende Frontscheibe aufweist, gelangt das Licht aus dem Sichtbereich 18 zum Bildsensor 22 und erzeugt dort ein pixelaufgelöstes Abbild des aktuell im Sichtbereich 18 befindlichen Abschnitts. Im weiteren soll dieser Abschnitt als Zeile bezeichnet werden, ohne dass aber wie oben bemerkt die Erfindung darauf beschränkt ist.

Jedes einzelne Pixel nimmt dabei eine Farbe oder einen Grauwert auf. Dabei sind beliebige Farbtiefen möglich, für die meisten Anwendungen ist aber eine Farbtiefe von 8 Bit, die 256 Graustufen entspricht, der beste Kompromiss zwischen schneller Verarbeitung und ausreichender Farb- oder Grauwertauflösung. In der weiteren Beschreibung wird zwischen dem Farb- und dem Grauwertbild sprachlich nicht länger unterschieden und beides als Grauwertbild bezeichnet.

In einer Weiterbildung der Erfindung ist auch möglich, zusätzlich in jedem Pixel oder mit einem von dem Bildsensor 22 unabhängigen Aufnahmeelement die jeweilige Entfernung anhand der Lichtlaufzeit zu bestimmen, um die Objektgeometrien zu erfassen und somit beispielsweise den Objekten auch ein Volumen zuzuordnen. Dies ist für die Planung von Lager- und Beförderungskapazitäten besonders nützlich.
Die rohen Bilddaten des Bildsensors 22 werden an einen Filter 24 weitergegeben, der auf einem programmierbarem Logikbaustein wie einem FPGA implementiert ist. Dieser Filter 24 bearbeitet die Rohdaten mittels an sich bekannter Bildverarbeitungsverfahren etwa zur Rauschunterdrückung, Kontraststärkung, Helligkeitskorrektur oder zum Ausgleich optischer Abbildungsfehler speziell in den Randbereichen (Flat Field Correction). Es können auch mehrere derartige Filter 24 auf demselben oder mehreren programmierbaren Logikbausteinen implementiert sein.

Die derart gefilterten Rohdaten werden anschließend direkt oder über einen gemeinsamen Zwischenspeicher an einen Binarisierer 26 übergeben, der zusammen mit dem Filter 24 auf demselben oder auf einem eigenen programmierbaren Logikbaustein implementiert ist. Die Funktionalität des Filters 22 und des Binarisierers 24 kann alternativ auch anders logisch verarbeitet werden, etwa in ASIC, mittels eines digitalen Signalprozessors (DSP) oder eines Mikroprozessors.

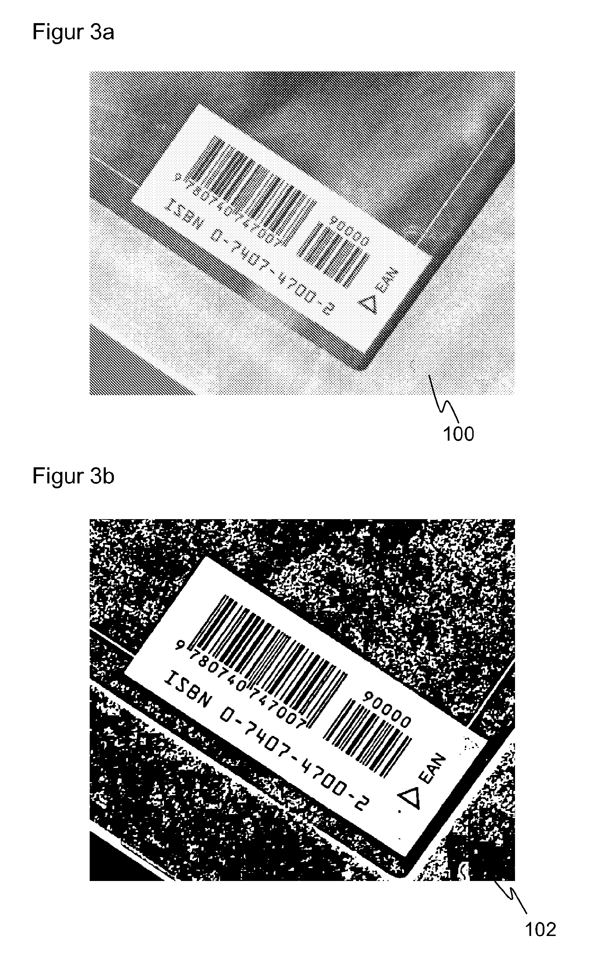

Der Binarisierer wandelt die gefilterten Grauwertbilddaten in ein Binärbild um, in dem jedes Pixel nur noch durch Null oder Eins codiert ist und somit ein echtes Schwarzweißbild ohne Graustufen entsteht. Diese Umwandlung ist in Figur 3 illustriert, die in Figur 3a ein beispielhaftes Grauwertbild 100 eines Barcodes und in Figur 3b das entsprechende Binärbild 102 zeigt. Das Binärbild kann zur Auflösungserhöhung gestreckt werden.

Bei der Binarisierung besteht immer die Gefahr, durch die Reduktion von acht auf ein Bit Farbtiefe wesentliche Information zu verlieren. Dies kann etwa bei einer starren Bewertungsschwelle geschehen, die dann zwischen einem schlecht beleuchteten hellen Bereich und einem ausgeleuchteten dunklen Bereich nicht mehr differenzieren kann. Deshalb verwendet der Binarisierer 26 intelligente Binarisierungsalgorithmen, die mit lokalen, also ortsabhängig variierenden beziehungsweise gleitenden Binarisierungsschwellen arbeiten. Damit wird verhindert, dass Codeinformationen oder andere wichtige Bildbestandteile bei der Vereinfachung von 256 Graustufen auf einen Schwarzweißwert verloren gehen.

Die binarisierten Bilddaten werden dann auf einen von einem PCI-Bus-Controller 28 gesteuerten PCI-Bus gelegt. Der Filter 24 legt seinerseits die gefilterten Grauwertdaten auf den PCI-Bus. Dort steht also sowohl das Grauwertbild als auch das Binärbild zur Verfügung. Die Filterverarbeitung im Filter 24 und die Binarisierung im Binarisierer 26 erfolgt in Echtzeit auf den jeweils aktuell gelieferten Rohbilddaten des Bildsensors 22 und dessen aktuell aufgenommener Zeile. Während diese Bildverarbeitung stattfindet, laufen bereits die Daten der nächsten Zeile in den Bildsensor 22 ein. Auf diese Weise wird in Echtzeit ohne nennenswerten Zeitverlust bereits während des Empfangs ein gefiltertes Grauwertbild und ein Binärbild erzeugt.

Einer internen CPU 30, die an den PCI-Bus angeschlossen ist, stehen damit nahezu gleichzeitig mit den Grauwertbilddaten auch die bereits binarisierten Bilddaten zur Verfügung.

Ein ebenfalls an den PCI-Bus angeschlossener FiFo-Speicher mit wrap-around 32 (Containertyp Queue, "first in first out") ist vorgesehen, um die jeweils aktuelle Bildzeile abzulegen und, wenn der FiFo-Speicher 32 voll gelaufen ist, die ältesten Bilddaten zu verwerfen. Nach einer Anlaufphase steht damit in dem FiFo-Speicher 32 jeweils ein Gesamtbild bereit, das aus einer Vielzahl von zuletzt aufgenommenen Zeilen besteht, deren Anzahl der Größe des FiFo-Speicher 32 entspricht. Ein wrap-around dieses FiFo-Speichers 32 bedeutet lediglich eine zyklische Anordnung in dem Sinne, dass sich an die letzte Speicherzelle wiederum die erste anschließt, worin eine besonders einfache Implementierung des FiFo-Prinzips als Endlosspeicher liegt.

In dem FiFo-Speicher 32 werden sowohl die Grauwertdaten als auch die Binärdaten mit jeweils gleicher relativer Adresse abgelegt. Dadurch ist besonders einfach, gleichzeitig auf korrespondierende Grauwerte und Binärwerte zuzugreifen.

Alternativ zu einem Anschluss über den PCI-Bus können auch direkte Verbindungen zwischen dem Binariserer und der internen CPU 30 und/oder dem FiFo-Speicher 32 vorgesehen sein. Schließlich ist auch denkbar, den Bildsensor 22 mit dem FiFo-Speicher 32 direkt oder über den PCI-Bus zu verbinden, um dort jeweils die eingelesenen Zeilen abzulegen, welche Filter 24 und Binarisierer 26 dann auslesen und weiterverarbeiten, während über den Bildsensor 22 neue Daten einlaufen und in nachfolgenden Speicherzellen des FiFo-Speicher 32 gesichert werden.

Die interne CPU 30 hat über den PCI-Bus Zugriff auf die aktuelle gefilterte Graubildzeile, die aktuelle binarisierte Zeile sowie sämtliche gespeicherte Zeilen im Fi-Fo-Speicher 32. Somit kann sie praktisch unmittelbar nach Empfang der Bilddaten sowohl basierend auf dem Graubild wie auch basierend auf dem Binärbild Bildauswertungen vornehmen.

Die interne CPU 30 findet in diesen Bilddaten nach einem noch zu erläuternden Verfahren Objekte und Codebereiche auf, dekodiert die Codes und übersetzt sie in Klartext und gibt die Dekodierergebnisse und je nach Konfiguration auch die Grauwert- und/oder Binärdaten über eine Schnittstelle 34 nach extern aus. Dies kann eine drahtgebundene oder eine drahtlose Schnittstelle sein, je nachdem, welcher der schnittstellentypischen Faktoren wie Bandbreite, störende Kabel, Sicherheit oder Kosten den Ausschlag gibt. Nicht abschließend sei Gigabit-Ethernet, seriell, Bluetooth oder WLAN genannt.

Es ist auch denkbar, einen weiteren programmierbaren Logikbaustein oder Funktionalitäten auf einem vorhandenen programmierbaren Logikbaustein 24, 26 vorzusehen, welche das Graubild und/oder das Binärbild in ein komprimiertes Format umwandeln. Das bevorzugte Format für das Graubild ist JPEG, das Binärbild kann etwa in BMP, Fax G3 oder Fax G4 konvertiert werden. Grundsätzlich kann diese Konvertierung auch in der internen CPU 30 erfolgen, deren Rechenleistung aber erfindungsgemäß bevorzugt von solchen Aufgaben entlastet ist, um die eigentliche Dekodierung vorzunehmen.

In ganz entsprechender Weise kann auf einem Logikbaustein oder in der internen CPU 30 auch ein Miniaturbild ("Thumbnail") des Gesamtbilds oder des Binärbilds erzeugt werden. Dies kann insbesondere schon vor oder gleichzeitig mit der Komprimierung geschehen, wobei auch das Miniaturbild bevorzugt in Echtzeit schon während des weiteren Dateneinlesens und darüber hinaus in einem komprimierten Format wie dem JPEG-Format erzeugt wird.

Das Miniaturbild kann vom Sensor nach außen weitergegeben werden, um eine übersichtliche Archivierung der gelesenen Objekte und Codes zu ermöglichen, ohne hohe Speicher- und Bandbreitenanforderungen zu stellen. Es ist gerade bei einem komprimierten Gesamtbild aufwändig, dieses Miniaturbild im Nachhinein extern zu erstellen, denn dazu muss erst dekomprimiert, anschließend auf das Miniaturbild verkleinert und danach erneut komprimiert werden.

Eine besondere Anwendung des Miniaturbilds ergibt sich für Paketdienste, die schon nach dem Stand der Technik anbieten, den aktuellen Ort des Pakets per Internet von nahezu überall aus abzufragen. Mittels des Miniaturbilds kann nicht nur dieser Ort und die Zeit, sondern auch ein Foto des erwarteten oder verschickten Pakets abgerufen und angezeigt werden.

In einer besonderen Ausführungsform der Erfindung ist der Sensor allein dafür ausgebildet, das Gesamtbild und das Miniaturbild zu erzeugen und nach extern auszugeben, kann also kein Binärbild generieren.

Eine verlustfreie Kompression der binäre Daten wie eine Lauflängencodierung, bei der Sequenzen gleichwertiger Bits numerisch durch deren Anzahl codiert ist, erlaubt beispielsweise das BMP-Format. Ein lauflängencodiertes Binärbild hat nicht nur weniger Speicherbedarf, sondern erlaubt auch eine schnellere Suche nach relevanten Codebereichen 22, wie nachfolgend noch erläutert wird. Das Format Fax G4 hat den Vorteil, dass ein Container vorgesehen ist, in dem die JPEG- und die Binärbilddaten gemeinsam untergebracht werden können.

Die interne CPU 30 kann jede beliebige gewünschte Kombination aus Grauwertbild, Binärbild und Miniaturbild in einem der genannten oder einem weiteren Grafikformat über die Schnittstelle 34 ausgeben. Eine besonders elegante Methode ist, das Binärbild in das Graubild einzucodieren, indem jeweils einem Bit der Grauwertdaten zu einem Pixel die Bedeutung des Binärbilds gegeben wird. Verwendet man hierfür das niederwertigste, so wird der Grauwert dadurch kaum merklich verändert.

Die Bildverarbeitung in der internen CPU 30 erfolgt in zwei Stufen. Zuerst werden interessierende Bereiche (ROI) identifiziert. Diese können sich durch Reflexionseigenschaften, bestimmte Formen, Farben oder dergleichen auszeichnen. Ein interessierender Bereich kann ein Objekt 14 oder ein Teil eines Objekts 14 sein, wie ein Codebereich 20 oder ein Textbereich insbesondere auf einem anhand seiner optischen Eigenschaften identifizierbaren Aufkleber.

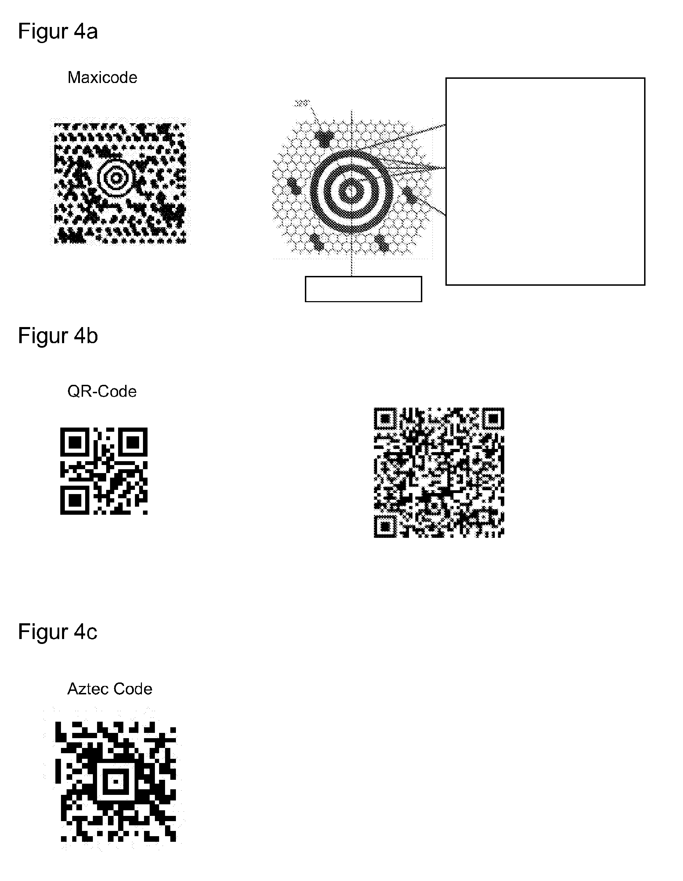

Innerhalb dieser interessierenden Bereiche muss die genaue Lage des Codes für die Dekodierung oder die genaue Lage des Textes für eine OCR-Erkennung von der internen CPU 30 ermittelt werden. Die Figur 4a-c zeigt einige Beispiele eines zweidimensionalen Codes. Die Erfindung kann auch für eindimensionale Codes eingesetzt werden, also im Wesentlichen Barcodes.

Die zweidimensionalen Codes sehen zur Justierung jeweils besondere charakteristische Standardmuster vor. Bei dem Maxicode gemäß Figur 4a ist das eine Art Zielscheibe von konzentrischen schwarzen und weißen Kreisen. Der QR (Quick Respionse)-Code gemäß Figur 4b sieht mehrere ineinander geschachtelte schwarze und weiße Quadrate vor, der Aztec Code gemäß Figur 4c nur ein solches Standardmuster. Wie im rechten Teil der Figur 4a illustriert, kann die durch einen senkrechten Strich illustrierte Referenzlage anhand einer bestimmten Signatur erkannt werden: es muss jeweils eine bestimmte Anzahl schwarzer, weißer, schwarzer usw. Pixel aufeinander folgen, sonst ist dieser Strich kein Durchmesser. Ähnliche charakteristische Signaturen lassen sich auch für andere zweidimensionale Codes definieren.

Diese Suche nach charakteristischen Suchmustern funktioniert auch im lauflängencodierten Binärbild; insbesondere drehlagenunabhängige Suchmuster können durch die Suche nach charakteristischen Lauflängenmustern schnell identifiziert werden.

Ist ein zweidimensionaler Code auf diese Weise erst einmal lokalisiert, so kann er im Binärbild und/oder im korrespondierend abgespeicherten Grauwertbild auch schnell dekodiert werden. Für einen eindimensionalen Code ist dies einfacher, jede Linie durch einen Barcode, die ihn in voller Längsrichtung schneidet, quert die volle Information.

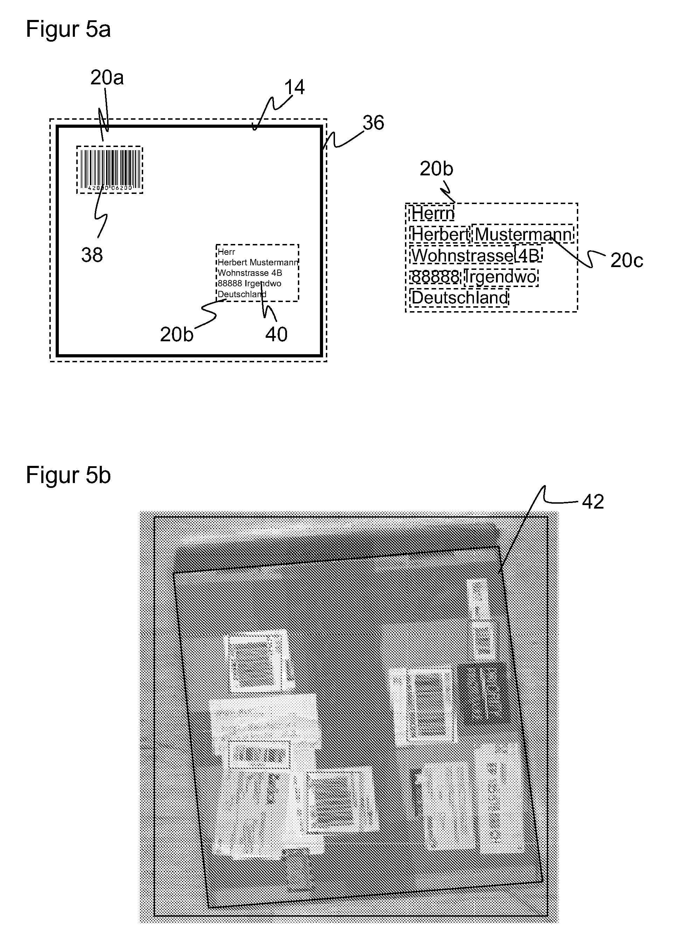

Die interne CPU 30 speichert die Positionen der interessierenden Bereiche. Dies ist in Figur 5a illustriert. Ein gestricheltes Rechteck 36 kennzeichnet den interessierenden Bereich eines Objekts 14. Der interessierende Bereich 20a eines Barcodes 38 und der interessierende Bereich 20b eines Texts 40 sind entsprechend durch gestrichelte Linien gekennzeichnet. Auf der rechten Seite ist der interessierende Bereich 20b um den Text 40 noch einmal vergrößert dargestellt. Man erkennt, dass auch jedes einzelne Wort einen interessierenden Bereich 20c bildet und die interne CPU 30 die Position jedes Wortes erkannt hat. In einer alternativen Ausführungsform zählt Text nicht zu den interessierenden Bereichen und seine Erkennung bleibt einer nachgeordneten externen Bildauswertung vorbehalten. Denn die verwendeten OCR-Algorithmen sind nicht nur recht aufwändig, sie greifen vor allem zum Abgleich und zur Ergänzung der dekodierten Information auf Adressdatenbanken zu, welche großen Speicherbedarf haben und regelmäßig aktualisiert werden müssen. Es ist also möglich, diese speicher- und rechenintensive OCR-Auswertung im Sensor vorzunehmen, jedoch sind auch Ausführungsformen denkbar, bei denen vom Sensor nur die Textbereiche erkannt werden, ohne sie auszuwerten oder bei denen jegliche im Zusammenhang mit Texterkennung liegende Auswertung nur extern erfolgt.

Aus den Positionen der interessierenden Bereiche und den Grauwert- oder Binärdaten kann eine Darstellung wie diejenige der Figur 5a generiert werden, bei der die interessierenden Bereiche durch gestrichelte, in der Praxis eher farbige Rechtecke oder sonstige graphische Hervorhebung erkennbar gemacht werden. Die Figur 5b zeigt ein solches Grauwertbild eines Pakets als Objekt 14 mit derart durch Rechtecke gekennzeichneten interessierenden Bereichen.

Für externe Weiterverarbeitung von Bilddaten in jeder Form ist oft unerwünscht, die Bilddaten in ihrer Gesamtheit weiterzugeben. Stattdessen würde es genügen, die Bilder auf bestimmte interessierende Bereiche zurechtzuschneiden ("Cropping") und nur Bilddaten innerhalb dieser interessierenden Bereiche zu speichern und zu übertragen. Dazu können prinzipiell diejenigen Bilddaten gelöscht werden, die außerhalb der gewünschten Grenzen liegen oder der Lesebereich wird von vorneherein entsprechend eingestellt, beispielsweise auf die Breite des Förderbands.

Das funktioniert aber nicht bei Echtzeitkomprimierung etwa in das JPEG-Format, weil bei den aktuell bearbeiteten Daten noch gar nicht bekannt ist, ob diese innerhalb oder außerhalb des auszuschneidenden Bereichs liegen. Dagegen ist die Lage des Objekts, das üblicherweise die Croppinggrenzen definiert, nach vollständigem Vorüberfahren bekannt und der Sensor kann zu diesem Zeitpunkt alle Croppingdaten ermitteln. Statt nun das Bild physikalisch durch Löschen von Daten außerhalb der Croppinggrenzen zu beschneiden, wofür die JPEG-Komprimierung zunächst rückgängig gemacht und nach dem Cropping erneut komprimiert werden müsste, wird der strukturierten Datei die Position des Objekts und damit die Lage der Croppinggrenzen hinzugefügt. Eine spätere externe Anwendung kann nun ihrerseits ein echtes Cropping vornehmen oder kennt zumindest die Grenzen, jenseits derer sie nicht mehr nach relevanten Informationen zu suchen braucht. Für die Bestimmung der Croppinggrenzen genügen in den meisten Fällen bereits einige Eckpunkte, sofern die Annahme quaderförmiger Objekte berechtigt ist. In Figur 5b ist eine solche Croppinggrenze 42 beispielhaft dargestellt, die allein durch die Eckpunkte des Rechtecks vollständig und mit sehr wenigen Daten beschrieben ist.

In einer weiteren Ausführungsform ist der Sensor 10 selbst oder ein vorgeschalteter und etwa über CAN-Bus angeschlossener weiterer Sensor in der Lage, die geometrische Kontur der Objekte 14 zu bestimmen. Ein mögliches Verfahren ist die Abtastung mit einem Laserscanner unter Bestimmung der Lichtlaufzeit. Positions-und Konturdaten, also etwa Höhe, Länge und Breite eines Objekts sowie das Volumen des Objekts oder eines umhüllenden Quaders können daraus bestimmt und der strukturierten Datei hinzugefügt werden. Befinden sich schließlich mehrere Codes auf einem Objekt, so kann die Objekthöhe für jeden Code bestimmt und der strukturierten Datei hinzugefügt werden. Da in der Nähe der Codes meist auch Textbereiche liegen, die für eine externe OCR-Erkennung relevant sind, dienen die Codelagen und -höhen als Referenzlage bzw. Ausgangspunkt für die Textsuche und man kennt bereits aus der strukturierten Datei den Maßstabsfaktor.

Aus den beschriebenen Bausteinen, nämlich dem Grauwertbild, dem Binärbild, dem Miniaturbild, etwaigen Konvertierungen derselben in ein bekanntes Grafikformat wie JPEG, BMP, Fax G4, den Positionen der interessierenden Bereiche und den Dekodierergebnissen beziehungsweise per OCR erkannten Texten, setzt die interne CPU 30 einzeln oder in beliebiger gewünschter Kombination eine strukturierte Datei zusammen. Eine hervorzuhebende Kombination ist ein Overlay ohne die Bilddaten, welches also nur Positionen interessierender Bereiche und zugehörige Dekodierergebnisse/Text enthält. Als Format für diese strukturierte Datei ist erfindungsgemäß XML vorgesehen, entsprechende strukturierte und übergreifende Formate können aber genauso verwendet werden.

Diese strukturierte Datei enthält also nicht nur die Grafiken und die Inhalte der Codes, sondern als Overlay auch die Positionen der interessierenden Bereiche, die nach Empfang über die externe Schnittstelle 34 zu Diagnose- oder anderen Zwecken angezeigt werden können. Wenn man ein Bild wie das der Figur 5b zusammen mit den dekodierten Inhalten der Codebereiche anzeigt, kann ein Benutzer auf einen Blick erkennen, ob die Bildauswertung korrekt war. Gegebenenfalls kann korrigierend eingegriffen werden. Die strukturierte Datei kann auch verwendet werden, um extern gegebenenfalls mit aufwändigeren Bildauswertungsalgorithmen, welche die Rechenleistung der internen CPU 30 überfordern, weitere Bildverarbeitungen vorzunehmen. Schließlich kann die strukturierte Datei gespeichert werden, um im Nachhinein Lesefehler nachzuvollziehen und in Zukunft zu vermeiden. Strukturierte Dateien, in denen derartige Lesefehler gefunden worden sind, können gegebenenfalls auch einer mächtigeren externen Bildverarbeitung übergeben werden, welche diese Erkennungsfehler nicht macht. Diese externe Bildverarbeitung könnte auch stichprobenartig automatisch erkennen, wenn der Sensor ein Bild falsch bewertet hat. Auf diese Weise können besonders schwierige Situationen aufwändiger behandelt und damit zweistufig die Fehlerrate weiter verringert werden.

Die Anzeige einer strukturierten Datei im XML-Format erfolgt über einen beliebigen XML-Viewer, der die grafischen Primitive in Rechtecke, Textinhalte, Grafikdarstellungen oder dergleichen übersetzt und darstellt. Beispielhaft seien einige Befehle bzw. grafische XML-Primitive genannt:
DOT - zeichne einen Punkt
CROSS - zeichne ein Kreuz
LINE - zeichne eine Linie zwischen zwei Punkten
BOX - zeichne ein Polygon mit vier Eckpunkten
TEXT - zeichne einen String

Die strukturierte Datei eines Overlays, welche sich aus den graphischen Primitiven zusammensetzt, kann beispielhaft wie folgt aussehen:
<?xml version="1.0"?>
<camera name="Cam#1" company="SICK AG" device="OurSensor" >
<image objectid="4" >
<QualityJpeg>75</QualityJpeg>
<ScaleBmp>4</ScaleBmp>
   <symbol type="ITL25" pos=" 3657 1321 3642 1144 3342 1171 3357 1349" >
   <result length="14" coding="Ascii >21385000021007</result>
   </symbol>
</image>
</camera>

Über die genannten Elemente der strukturierten Datei hinaus kann auch eine Zuordnung zwischen einem erkannten Objekt und den darauf befindlichen Codes beziehungsweise Texten innerhalb der XML Datei oder in anderer Weise etwa als eigene Datei exportiert werden. Damit stehen an der Sensorschnittstelle 34 sämtliche relevanten Informationen zur Verfügung: alle Informationen über das Objekt, welche bei Verwendung eines entfernungsauflösenden Bildsensors auch noch Objektkonturen und daraus berechnete Volumina enthalten können sowie alle zu dem Objekt gehörigen Code- und Textinformationen sowie eine anzeigbare XML-Datei, mit der die Gewinnung dieser Informationen nachvollzogen, im Bedarfsfall verbessert oder zu Diagnosezwecken überprüft werden kann.

## Patentansprüche

1. Optoelektronischer Sensor (10) zum Erfassen von Codes mit einem Lichtempfänger (22), der für ein abschnittsweises Einlesen von Farb- oder Grauwertbilddaten ausgebildet ist sowie mit einer Auswertungseinheit (30), welche die Bilddaten zu einem Gesamtbild (100) zusammensetzen kann, wobei zusätzlich ein Binarisierer (26) des Sensors (10) vorgesehen ist, um aus den Farb- oder Grauwertbilddaten ein Binärbild (102) zu erzeugen, **dadurch gekennzeichnet, dass** der Binarisierer (26) für eine Umwandlung in das Binärbild (102) bereits während des Empfangs und/oder in Echtzeit ausgebildet ist, indem die Farb- oder Grauwertbilddaten jedes eingelesenen Abschnitts binarisiert werden, noch während die weiteren Abschnitte eingelesen werden.

2. Sensor (10) nach Anspruch 1, **dadurch gekennzeichnet, dass** die Auswertungseinheit (30) dafür ausgebildet ist, eine strukturierte Datei zu erzeugen, die Dekodierergebnisse (38, 40) und/oder Overlaydaten mit Positionen interessierender Bereiche (20a, 20b, 20c, 36) von erkannten Objekten (14) oder Bereichen mit Codes oder Text (20, 38, 40) enthält.

3. Optoelektronischer Sensor (10) zum Erfassen von Codes mit einem Lichtempfänger (22), der für ein Einlesen von Farb- oder Grauwertbilddaten ausgebildet ist sowie mit einer Auswertungseinheit (30), welche die Bilddaten zu einem Gesamtbild (100) zusammensetzen kann, **dadurch gekennzeichnet, dass** die Auswertungseinheit (30) dafür ausgebildet ist, eine strukturierte Datei zu erzeugen, die Dekodierergebnisse (38, 40) und/oder Overlaydaten mit Positionen interessierender Bereiche (20a, 20b, 20c, 36) von erkannten Objekten (14) oder Bereichen mit Codes oder Text (20, 38, 40) enthält.

4. Sensor (10) nach Anspruch 3, **dadurch gekennzeichnet, dass** der Lichtempfänger (22) für ein abschnittsweises Einlesen der Farb- oder Grauwertbilddaten ausgebildet und zusätzlich ein Binarisierer (26) des Sensors (10) vorgesehen ist, um aus den Farb- oder Grauwertbilddaten ein Binärbild (102) zu erzeugen und wobei insbesondere der Binarisierer (26) für eine Umwandlung in das Binärbild (102) bereits während des Empfangs und/oder in Echtzeit ausgebildet ist, indem die Farb- oder Grauwertbilddaten jedes eingelesenen Abschnitts binarisiert werden, noch während die weiteren Abschnitte eingelesen werden.

5. Sensor (10) nach einem der vorhergehenden Ansprüche, **dadurch gekennzeichnet, dass** die Auswertungseinheit (30) dafür ausgebildet ist, das Gesamtbild (100), das Binärbild (102) und/oder ein Miniaturbild insbesondere als Bestandteil der strukturierten Datei auszugeben.

6. Sensor (10) nach einem der Ansprüche 2 bis 5, **dadurch gekennzeichnet, dass** die Auswertungseinheit (30) dafür ausgebildet ist, die strukturierte Datei mit Croppinginformationen zu versehen, welche die Lage von Objekten in den Bilddaten (100, 102) insbesondere anhand von Positionen der Eckpunkte bezeichnen.

7. Sensor (10) nach einem der Ansprüche 2 bis 6, **dadurch gekennzeichnet, dass** die Auswertungseinheit (30) dafür ausgebildet ist, die strukturierte Datei mit grafischen Befehlen zu versehen, welche bei Anzeige der strukturierten Datei in einem externen Anzeigegerät die interessierenden Bereiche (20a, 20b, 20c, 36) optisch markieren, insbesondere durch farbige Rechtecke und/oder die Dekodierergebnisse in Textform anzeigen.

8. Sensor (10) nach einem der Ansprüche 2 bis 7, **dadurch gekennzeichnet, dass** die Auswertungseinheit (30) dafür ausgebildet ist, die strukturierte Datei mit Informationen zu versehen, welche eine Verbindung zwischen erkannten Objekten (14), Codes (38, 40) und/oder Dekodierergebnissen (38, 40) knüpfen.

9. Sensor (10) nach einem der Ansprüche 2 bis 8, **dadurch gekennzeichnet, dass** die Auswertungseinheit (30) dafür ausgebildet ist, die strukturierte Datei mit Informationen zu versehen, welche die Länge, Breite, Höhe und das maximale Boxvolumen erkannter Objekte und/oder dreidimensionale Positionen, insbesondere Höhen, der interessierenden Bereichen zugrundliegenden erkannten Objekte (14) und/oder Bereichen mit Codes oder Text (20, 38, 40) beschreiben.

10. Sensor (10) nach einem der vorhergehenden Ansprüche, der ein kamerabasierter Codeleser insbesondere mit einer Zeilenkamera und/oder stationär an einem Förderer (12) montiert ist.

11. Sensor (10) nach einem der vorhergehenden Ansprüche, **dadurch gekennzeichnet, dass** der Binarisierer (26) für eine Binarisierung mit gleitenden und/oder lokalen Binarisierungsschwellen ausgebildet ist.

12. Sensor (10) nach einem der vorhergehenden Ansprüche, **dadurch gekennzeichnet, dass** der Lichtempfänger (22) und der Binarisierer (26) dafür ausgebildet sind, die Farb- oder Grauwertbilddaten jedes Abschnitts im Wesentlichen gleichzeitig mit den binarisierten Bilddaten an die Auswertungseinheit (30) zu übergeben oder zwischenzuspeichern, insbesondere mit den gleichen relativen Adressen.

13. Sensor (10) nach einem der vorhergehenden Ansprüche, **dadurch gekennzeichnet, dass** der Lichtempfänger (22) über zumindest einen programmierbaren Logikbaustein (24, 26) mit der Auswertungseinheit insbesondere per PCI-Bus verbunden ist und auf dem programmierbaren Logikbaustein der Binarisierer (26) und/oder ein Bildverarbeitungsfilter (24) implementiert ist.

14. Sensor (10) nach einem der vorhergehenden Ansprüche, **dadurch gekennzeichnet, dass** die Auswertungseinheit (30) mit den Sensorkomponenten in ein gemeinsames Gehäuse integriert ist und eine Schnittstelle (34) vorgesehen ist, um Bilddaten des Gesamtbilds (100) und des Binärbilds (102) nach außen weiterzugeben, insbesondere eine drahtgebundene serielle oder Ethernet-Schnittstelle oder eine drahtlose Bluetooth- oder WLAN-Schnittstelle.

15. Sensor (10) nach einem der vorhergehenden Ansprüche, **dadurch gekennzeichnet, dass** der Binarisierer (26) und/oder die Auswertungseinheit (30) dafür ausgebildet ist, das Binärbild (102) verlustfrei zu komprimieren oder in das Gesamtbild einzucodieren.

16. Sensor (10) nach einem der vorhergehenden Ansprüche, **dadurch gekennzeichnet, dass** die Auswertungseinheit (30) dafür ausgebildet ist, in dem Binärbild (102) Codes anhand von charakteristischen Suchmustern aufzufinden, also Signaturen, welche einen Code gegenüber anderen Bildelementen als solchen kennzeichnen.

17. Verfahren zum Erfassen von Codes mittels eines optoelektronischen Sensors (10), bei dem Farb- oder Grauwertbilddaten abschnittsweise eingelesen und zu einem Gesamtbild (100) zusammengesetzt werden und wobei aus den Farb- oder Grauwertbilddaten ein Binärbild (102) erzeugt wird, **dadurch gekennzeichnet, dass** eine Umwandlung in das Binärbild (102) bereits während des Empfangs und/oder in Echtzeit vorgenommen wird, indem die Farb- oder Grauwertbilddaten jedes eingelesenen Abschnitts binarisiert werden, noch während die weiteren Abschnitte eingelesen werden.

18. Verfahren nach Anspruch 17, **dadurch gekennzeichnet, dass** in dem Sensor (10) eine strukturierte Datei zur Ausgabe an eine externe Steuerung eines externen Anzeigegeräts erzeugt wird, die Overlaydaten mit Dekodierergebnissen und/oder mit Positionen interessierender Bereiche (20a, 20b, 20c, 36) von erkannten Objekten oder Bereichen mit Codes oder Text (20, 38, 40) enthält.

19. Verfahren zum Erfassen von Codes mittels eines optoelektronischen Sensors (10), bei dem Farb- oder Grauwertbilddaten abschnittsweise, insbesondere zeilenweise eingelesen und zu einem Gesamtbild (100) zusammengesetzt werden, **dadurch gekennzeichnet, dass** eine strukturierte Datei erzeugt wird, welche Dekodierergebnisse (38, 40) und/oder Overlaydaten mit Positionen interessierender Bereiche (20a, 20b, 20c, 36) von erkannten Objekten (14) oder Bereichen mit Codes oder Text (20, 38, 40) enthält.

20. Verfahren nach Anspruch 19, **dadurch gekennzeichnet, dass** aus den Farb- oder Grauwertbilddaten ein Binärbild (102) erzeugt wird und die Umwandlung in das Binärbild (102) bereits während des Empfangs und/oder in Echtzeit vorgenommen wird, indem die Farb- oder Grauwertbilddaten jedes eingelesenen Abschnitts binarisiert werden, noch während die weiteren Abschnitte eingelesen werden.

21. Verfahren nach einem der Ansprüche 18 bis 20, **dadurch gekennzeichnet, dass** das Gesamtbild (100), das Binärbild (102) und/oder ein Miniaturbild insbesondere als Bestandteil der strukturierten Datei ausgegeben wird.

22. Verfahren nach einem der Ansprüche 18 bis 21, **dadurch gekennzeichnet, dass** die strukturierte Datei mit Croppinginformationen versehen wird, welche die Lage von Objekten in den Bilddaten (100, 102) insbesondere anhand von Positionen der Eckpunkte bezeichnen.

23. Verfahren nach einem der Ansprüche 18 bis 22, **dadurch gekennzeichnet, dass** die strukturierte Datei mit grafischen Befehlen versehen wird, welche bei Anzeige der strukturierten Datei die interessierenden Bereiche (20a, 20b, 20c, 36) optisch markieren, insbesondere durch farbige Rechtecke und/oder die Dekodierergebnisse in Textform anzeigen.

24. Verfahren nach einem der Ansprüche 18 bis 23, **dadurch gekennzeichnet, dass** die strukturierte Datei mit Informationen versehen wird, welche eine Verbindung zwischen erkannten Objekten (14), Codes (38, 40) und/oder Dekodierergebnissen (38, 40) knüpfen.

25. Verfahren nach einem der Ansprüche 18 bis 24, **dadurch gekennzeichnet, dass** die strukturierte Datei mit Informationen versehen wird, welche die Länge, Breite, Höhe und das maximale Boxvolumen erkannter Objekte und/oder dreidimensionale Positionen, insbesondere Höhen, der interessierenden Bereichen zugrundliegenden erkannten Objekte (14) und/oder Bereichen mit Codes oder Text (20, 38, 40) beschreiben.

26. Verfahren nach einem der Ansprüche 17 bis 25, **dadurch gekennzeichnet, dass** der Sensor (10) ein kamerabasierter Codeleser insbesondere mit einer Zeilenkamera ist, der stationär an einem Förderer (12) montiert ist.

## Geänderte Patentansprüche

### Geänderte Patentansprüche gemäss Regel 137(2) EPÜ.

**1.** Kamerabasierter Codeleser (10), insbesondere mit einer Zeilenkamera, mit einem Lichtempfänger (22), der für ein Einlesen von Farb- oder Grauwertbilddaten ausgebildet ist sowie mit einer Auswertungseinheit (30), welche die Bilddaten zu einem Gesamtbild (100) zusammensetzen kann, **dadurch gekennzeichnet, dass** die Auswertungseinheit (30) dafür ausgebildet ist, eine strukturierte Datei zu erzeugen, die Dekodierergebnisse (38, 40) und/oder Overlaydaten mit Positionen interessierender Bereiche (20a, 20b, 20c, 36) von erkannten Objekten (14) oder Bereichen mit Codes oder Text (20, 38, 40) enthält.

**2.** Codeleser (10) nach Anspruch 1, **dadurch gekennzeichnet, dass** der Lichtempfänger (22) für ein abschnittsweises Einlesen der Farb- oder Grauwertbilddaten ausgebildet und zusätzlich ein Binarisierer (26) des Codelesers (10) vorgesehen ist, um aus den Farb- oder Grauwertbilddaten ein Binärbild (102) zu erzeugen und wobei insbesondere der Binarisierer (26) für eine Umwandlung in das Binärbild (102) bereits während des Empfangs und/oder in Echtzeit ausgebildet ist, indem die Farb- oder Grauwertbilddaten jedes eingelesenen Abschnitts binarisiert werden, noch während die weiteren Abschnitte eingelesen werden.

**3.** Codeleser (10) nach Anspruch 1 oder 2, **dadurch gekennzeichnet, dass** die Auswertungseinheit (30) dafür ausgebildet ist, das Gesamtbild (100), das Binärbild (102) und/oder ein Miniaturbild insbesondere als Bestandteil der strukturierten Datei auszugeben.

**4.** Codeleser (10) nach einem der vorhergehenden Ansprüche, **dadurch gekennzeichnet, dass** die Auswertungseinheit (30) dafür ausgebildet ist, die strukturierte Datei mit Croppinginformationen zu versehen, welche die Lage von Objekten in den Bilddaten (100, 102) insbesondere anhand von Positionen der Eckpunkte bezeichnen.

**5.** Codeleser (10) nach einem der vorhergehenden Ansprüche, **dadurch gekennzeichnet, dass** die Auswertungseinheit (30) dafür ausgebildet ist, die strukturierte Datei mit grafischen Befehlen zu versehen, welche bei Anzeige der strukturierten Datei in einem externen Anzeigegerät die interessierenden Bereiche (20a, 20b, 20c, 36) optisch markieren, insbesondere durch farbige Rechtecke und/oder die Dekodierergebnisse in Textform anzeigen.

**6.** Codeleser (10) nach einem der vorhergehenden Ansprüche, **dadurch gekennzeichnet, dass** die Auswertungseinheit (30) dafür ausgebildet ist, die strukturierte Datei mit Informationen zu versehen, welche eine Verbindung zwischen erkannten Objekten (14), Codes (38, 40) und/oder Dekodierergebnissen (38, 40) knüpfen.

**7.** Codeleser (10) nach einem der vorhergehenden Ansprüche, **dadurch gekennzeichnet, dass** die Auswertungseinheit (30) dafür ausgebildet ist, die strukturierte Datei mit Informationen zu versehen, welche die Länge, Breite, Höhe und das maximale Boxvolumen erkannter Objekte und/oder dreidimensionale Positionen, insbesondere Höhen, der interessierenden Bereichen zugrundliegenden erkannten Objekte (14) und/oder Bereichen mit Codes oder Text (20, 38, 40) beschreiben.

**8.** Codeleser (10) nach einem der vorhergehenden Ansprüche, der stationär an einem Förderer (12) montiert ist.

**9.** Codeleser (10) nach einem der Ansprüche 2 bis 8, **dadurch gekennzeichnet, dass** der Binarisierer (26) für eine Binarisierung mit gleitenden und/oder lokalen Binarisierungsschwellen ausgebildet ist.

**10.** Codeleser (10) nach einem der Ansprüche 2 bis 9, **dadurch gekennzeichnet, dass** der Lichtempfänger (22) und der Binarisierer (26) dafür ausgebildet sind, die Farb- oder Grauwertbilddaten jedes Abschnitts im Wesentlichen gleichzeitig mit den binarisierten Bilddaten an die Auswertungseinheit (30) zu übergeben oder zwischenzuspeichern, insbesondere mit den gleichen relativen Adressen.

**11.** Codeleser (10) nach einem der Ansprüche 2 bis 10, **dadurch gekennzeichnet, dass** der Lichtempfänger (22) über zumindest einen programmierbaren Logikbaustein (24, 26) mit der Auswertungseinheit insbesondere per PCI-Bus verbunden ist und auf dem programmierbaren Logikbaustein der Binarisierer (26) und/oder ein Bildverarbeitungsfilter (24) implementiert ist.

**12.** Codeleser (10) nach einem der Ansprüche 2 bis 11, **dadurch gekennzeichnet, dass** die Auswertungseinheit (30) mit den Sensorkomponenten in ein gemeinsames Gehäuse integriert ist und eine Schnittstelle (34) vorgesehen ist, um Bilddaten des Gesamtbilds (100) und des Binärbilds (102) nach außen weiterzugeben, insbesondere eine drahtgebundene serielle oder Ethernet-Schnittstelle oder eine drahtlose Bluetooth- oder WLAN-Schnittstelle.

**13.** Codeleser (10) nach einem der Ansprüche 2 bis 12, **dadurch gekennzeichnet, dass** der Binarisierer (26) und/oder die Auswertungseinheit (30) dafür ausgebildet ist, das Binärbild (102) verlustfrei zu komprimieren oder in das Gesamtbild einzucodieren.

**14.** Codeleser (10) nach einem der Ansprüche 2 bis 13, **dadurch gekennzeichnet, dass** die Auswertungseinheit (30) dafür ausgebildet ist, in dem Binärbild (102) Codes anhand von charakteristischen Suchmustern aufzufinden, also Signaturen, welche einen Code gegenüber anderen Bildelementen als solchen kennzeichnen.

**15.** Verfahren zum Erfassen von Codes mittels eines kamerabasierten Codelesers (10), insbesondere mit einer Zeilenkamera, bei dem Farb- oder Grauwertbilddaten abschnittsweise, insbesondere zeilenweise eingelesen und zu einem Gesamtbild (100) zusammengesetzt werden, **dadurch gekennzeichnet, dass** eine strukturierte Datei erzeugt wird, welche Dekodierergebnisse (38, 40) und/oder Overlaydaten mit Positionen interessierender Bereiche (20a, 20b, 20c, 36) von erkannten Objekten (14) oder Bereichen mit Codes oder Text (20, 38, 40) enthält.

**16.** Verfahren nach Anspruch 15, **dadurch gekennzeichnet, dass** aus den Farb- oder Grauwertbilddaten ein Binärbild (102) erzeugt wird und die Umwandlung in das Binärbild (102) bereits während des Empfangs und/oder in Echtzeit vorgenommen wird, indem die Farb- oder Grauwertbilddaten jedes eingelesenen Abschnitts binarisiert werden, noch während die weiteren Abschnitte eingelesen werden.

**17.** Verfahren nach Anspruch 15 oder 16, **dadurch gekennzeichnet, dass** das Gesamtbild (100), das Binärbild (102) und/oder ein Miniaturbild insbesondere als Bestandteil der strukturierten Datei ausgegeben wird.

**18.** Verfahren nach einem der Ansprüche 15 bis 17, **dadurch gekennzeichnet, dass** die strukturierte Datei mit Croppinginformationen versehen wird, welche die Lage von Objekten in den Bilddaten (100, 102) insbesondere anhand von Positionen der Eckpunkte bezeichnen.

**19.** Verfahren nach einem der Ansprüche 15 bis 18, **dadurch gekennzeichnet, dass** die strukturierte Datei mit grafischen Befehlen versehen wird, welche bei Anzeige der strukturierten Datei die interessierenden Bereiche (20a, 20b, 20c, 36) optisch markieren, insbesondere durch farbige Rechtecke und/oder die Dekodierergebnisse in Textform anzeigen.

**20.** Verfahren nach einem der Ansprüche 15 bis 19, **dadurch gekennzeichnet, dass** die strukturierte Datei mit Informationen versehen wird, welche eine Verbindung zwischen erkannten Objekten (14), Codes (38, 40) und/oder Dekodierergebnissen (38, 40) knüpfen.

**21.** Verfahren nach einem der Ansprüche 15 bis 20, **dadurch gekennzeichnet, dass** die strukturierte Datei mit Informationen versehen wird, welche die Länge, Breite, Höhe und das maximale Boxvolumen erkannter Objekte und/oder dreidimensionale Positionen, insbesondere Höhen, der interessierenden Bereichen zugrundliegenden erkannten Objekte (14) und/oder Bereichen mit Codes oder Text (20, 38, 40) beschreiben.

**22.** Verfahren nach einem der Ansprüche 15 bis 21, **dadurch gekennzeichnet, dass** Codeleser (10) stationär an einem Förderer (12) montiert ist.
